# EUROPÄISCHE PATENTSCHRIFT

(11) **EP 0 652 623 B1**
(45) Veröffentlichungstag und Bekanntmachung des Hinweises auf die Patenterteilung: **23.07.1997**
(21) Anmeldenummer: 94115826.3
(22) Anmeldetag: 07.10.1994
(51) Int. Cl.: H02K 3/48, H02K 3/24

(54) **Rotor eines Turbogenerators mit direkter Gaskühlung der Erregerwicklung**
Rotor of turbogenerator with direct gas cooling of the exciter coil
Rotor d'un turbogénérateur avec refroidissement direct à gaz de l'enroulement d'excitation

(30) Priorität: 04.11.1993 DE 4337628
(43) Veröffentlichungstag der Anmeldung: 10.05.1995
(73) Patentinhaber: ASEA BROWN BOVERI AG, 5400 Baden (CH)
(72) Erfinder: Kleinburger, Johann, CH-8181 Höri (CH); Zimmermann, Hans, CH-8617 Mönchaltorf (CH)

(56) Entgegenhaltungen:
- GB-A- 224 525
- US-A- 4 633 116
- PATENT ABSTRACTS OF JAPAN, vol. 9, no. 85 (E-308) (1808), 13. April 1985 & JP-A-59 216 448 (TOSHIBA), 6. Dezember 1984
- PATENT ABSTRACTS OF JAPAN, vol. 2, no. 45 (E-24), 27. März 1978 & JP-A-53 008 708 (TOKYO SHIBAURE DENKI), 26. Januar 1978

## Beschreibung

### TECHNISCHES GEBIET

Die Erfindung bezieht sich auf einen Rotor eines Turbogenerators mit direkter Gaskühlung der Erregerwicklung, wobei die Erregerwicklungsleiter in Längsnuten im Rotorballen des Rotors angeordnet sind und diese Nuten mittels Nutkeilen verschlossen sind, und wobei zwischen dem Nutgrund und dem darüberliegenden Erregerwicklungsleiter ein Isoliertreifen vorgesehen ist.

Ein Rotor dieser Gattung ist beispielsweise aus der US-A-4,152,610 bekannt.

### TECHNOLOGISCHER HINTERGRUND UND STAND DER TECHNIK

Für die direkte Gaskühlung der Erregerwicklung wurden im Laufe der Zeit unterschiedliche Methoden entwickelt:
a) Das Kühlgas tritt unterhalb des Wickelkopfes der Rotorwicklung ein und teilt sich am Beginn des Rotorballens in zwei Richtungen auf. Ein Teil des Kühlgases durchströmt die Wickelkopfleiter und verlässt den Wickelkopfraum durch besondere Oeffnungen, die in der Polzone am Rotorballen angeordnet sind. Der Hauptteil der Luftmenge tritt jedoch am Ballenumfang in die aus Hohlleitern aufgebaute Erregerwicklung ein und strömt in Ballenmitte aus (US-A-4,634,910).
b) Das Kühlgas wird unterhalb der Erregerwicklung längs eines besonderen Kanals (Grundnut oder Subnut, engl. "subslot") in der Nut zu den Leitern geführt. Es tritt, in axialer Richtung gesehen, an verschiedenen Stellen aus (US-A-3,119,033 oder US-A-4,152,610).
c) Eine Kombination der Methoden a) und b). Dabei erfolgt die Gaszufuhr für den Erregerleitungsabschnitt in der Rotormitte durch Grund- oder Subnuten, während die endseitigen Abschnitte direkt vom Wickelkofraum gespeist werden.

Bei allen bekannten Varianten ist es unerlässlich, die Erregerwicklungsleiter sicher in den Rotornuten festzulegen, was regelmässig durch Nutkeile erfolgt. Im Betrieb werden die Erregerleitungen infolge Fliehkrafteinwirkung gegen die Nutkeile gepresst und sind damit auch weitgehend axial gesichert. Setzerscheinungen beim Schleudern und im Betrieb führen jodoch zu Lockerungen im Leiterverband. Diese können dazu führen, dass nach Betriebsunterbrüchen, z.B. beim Wellendrehen oder Wiederanfahren der Maschine Relativbewegungen zwischen Erregerleitern und Nut bzw. Keil auftreten. Aus diesem Grunde werden zwischen Nutkeil und Wicklung federelastische Zwischenlagen unter Vorspannung eingebaut. Bei Rotoren ohne Grundnut werden federelastische Zwischenlagen, meist sogenannte Wellfedern, auch im Nutgrund verwendet. Diese müssen in Nutlängsrichtung zumindest an einer Stelle - meist am Rotorballenende fixiert sein. Während die axiale Fixierung der federelastischen Zwischenlagen unter dem Nutkeil keine Probleme bereitet, gestaltet sich bei Rotoren mit Grundnut die Fixierung der besagten Zwischenlagen am Nutgrund schwieriger, da die entsprechenden Elemente den Querschnitt der Grundnut nicht einengen dürfen. Fertigungs- und/oder Festigkeitsgründe verbieten das Einbringen von Bohrungen und dergleichen in die Nut.

### KURZE DARSTELLUNG DER ERFINDUNG

Der Erfindung liegt die Aufgabe zugrunde, einen Rotor der eingangs genannten Gattung zu schaffen, dessen Erregerwicklung mit einfachen Mitteln gegen axiale Relativbewegungen gesichert ist und die dazu verwendeten Sicherungsmittel weder die Festigkeit des Rotors beeinträchtigen, noch den Durchfluss des Kühlgases behindern.

Diese Aufgabe wird erfindungsgemäss dadurch gelöst, dass zwischen dem besagten Isolierstreifen und dem besagten wicklungsleiter eine federelastische Zwischenlage in Form eines parallelen Streifens vorgesehen ist, die sich vom Ballenende ausgehend in Richtung Rotorballenmitte erstreckt, und dass die federelastische Zwischenlage ein Paar nach unten weisende Vorsprünge aufweist, die in seitliche Ausnehmungen im Isoliertreifen eingreifen.

Der Vorteil der Erfindung ist insbesondere darin zu sehen, dass sich mit einfachen Mitteln eine axiale Fixierung der federelastischen Zwischenlage erreichen lässt, die allen triebsbeanspruchungen standhält, wirtschaftlich herzustellen ist und die Kühlgaswege nicht beeinträchtigt. Sie lässt sich bei Rotoren mit den unterschiedlichsten Kühlmethoden einsetzen, ist aber insbesondere für Rotoren mit Grundnut geeignet.

Ausführungsbeispiele der Erfindung sowie die damit erzielbaren Vorteile werden nachfolgend anhand der Zeichnung erläutert.

### KURZE BESCHREIBUNG DER ZEICHNUNG

In der Zeichnung sind Ausführungsbeispiele der Erfindung schematisch dargestellt, und zwar zeigt:
- Fig.1: einen teilweisen, vereinfachten Längsschnitt durch den Rotor eines Turbogenerators zur Verdeutlichung der Kühlgasführung;
- Fig.2: einen Querschnitt durch den Rotor gemäss Fig.1 längs deren Linie AA;
- Fig.3: einen Querschnitt durch den Rotor gemäss Fig.1 längs deren Linie BB;
- Fig.4: einen Querschnitt durch den Rotor gemäss Fig.1 längs deren Linie CC;
- Fig.5: einen vergrösserten Ausschnitt aus Fig.4;
- Fig.6: eine Draufsicht auf den im Nutgrund liegenden Isolierstreifen und Wellfeder bei entfernten Erregerleitern;
- Fig.7: eine Seitenansicht auf den Isolierstreifen und die Wellfeder.

### WEGE ZUR AUSFÜHRUNG DER ERFINDUNG

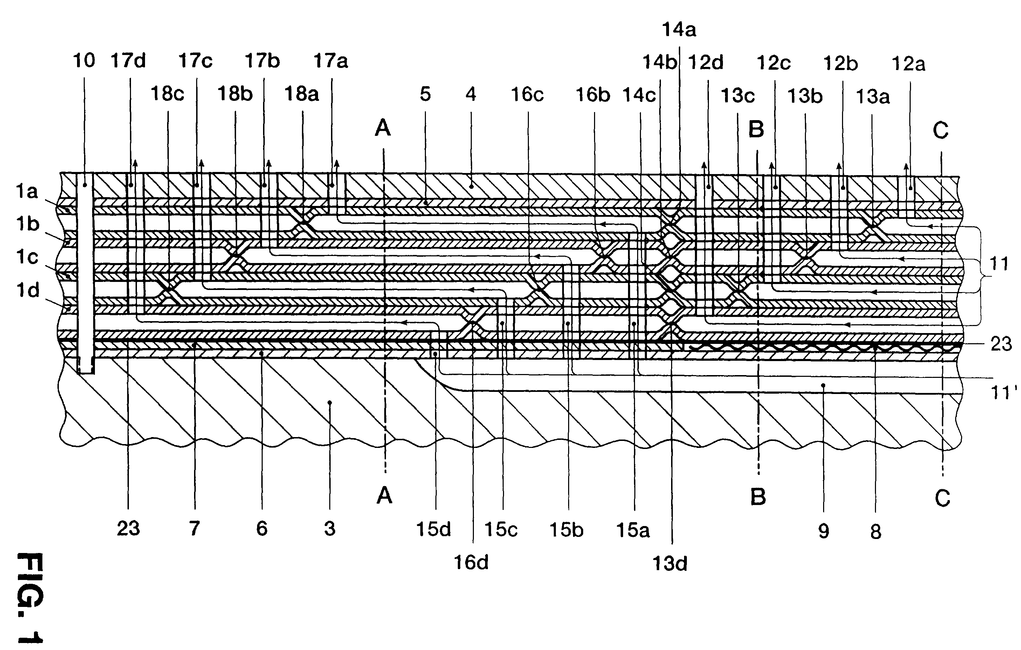

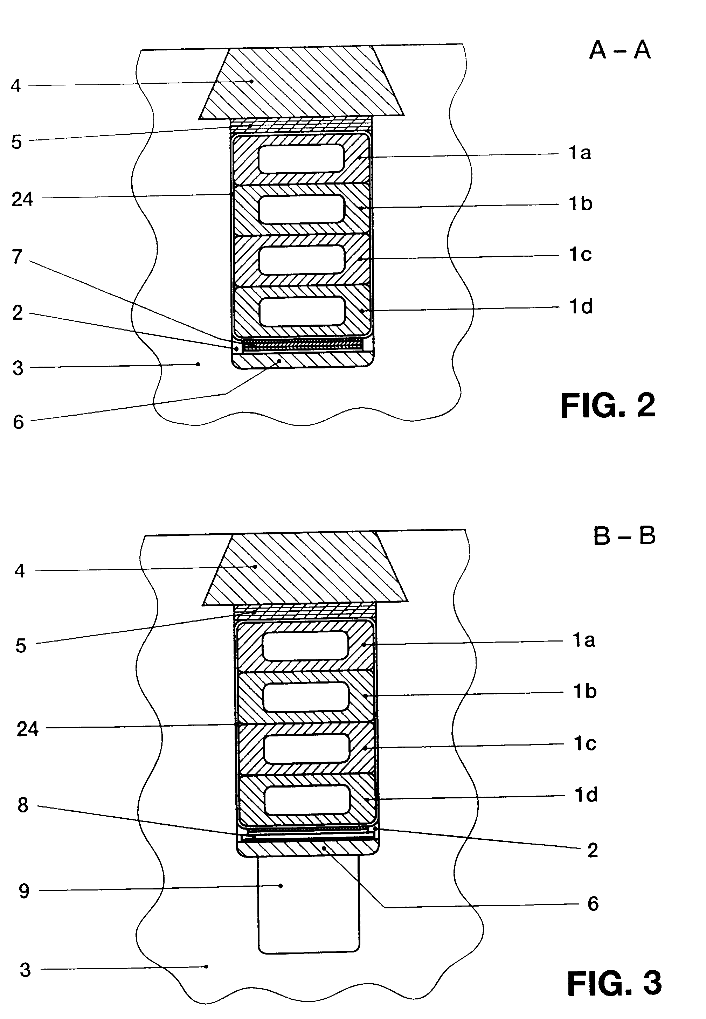

Im teilweisen, vereinfachten Längsschnitt durch den mittleren Abschnitt des Rotors eines Turbogenerators gemäss Fig.1 und 2 ist die durchwegs aus Hohlleitern 1 aufgebaute Erregerwicklung in Nuten 2 im Rotorballen 3 angeordnet. Aus Gründen einer übersichtlichen Darstellung sind im Beispielsfall nur vier radial übereinanderliegende Hohlleiter 1a, 1b, 1c, 1d dargestellt. Die Nut 2 ist durch einen Nutkeil 4 verschlossen. Zwischen dem obersten Hohlleiter la und dem Nutkeil 4 liegt eine Keilunterlage 5 aus Isoliermaterial. Diese Keilunterlage kann selbst federelastisch sein. Sie kann aber auch aus einem Streifen aus Isoliermaterial und einem separatem federelastischen Streifen, z.B. einer Wellfeder, bestehen.

Im Nutgrund liegt ein Isolierstreifen 6. Dieser füllt die Nut 2 in ihrer gesamten Breite aus und ist an seiner Unterseite der Nutform angepasst. Zwischen dem Isolierstreifen 6 und dem untersten Hohlleiter 1d liegt ein Füllstreifen 7, dessen Funktion später erläutert wird.

Im ausschnittsweisen Querschnitt durch den endseitigen Rotorabschnitt gemäss Fig.3 tritt an die Stelle des Füllstreifens 7 eine Wellfeder 8. In diesem endseitigen Abschnitt weist die Nut 2 eine kanalartige Vertiefung, eine Grund- oder Subnut 9 auf. Diese ist - in Umfangsrichtung gesehen - schmäler als die die Hohlleiter 1 aufnehmende Nut 2. Sie erstreckt sich vom (in Fig.1 nicht sichtbaren) Rotorballenanfang bis etwa zur ein Viertel bis ein Drittel der gesamten Rotorballenlänge und läuft dort aus. Aus Gründen der Deutlichkeit sind in den Figuren 1 bis 3 der Isolierstreifen 6, der Füllstreifen 7 und auch die Wellfeder 8 übertrieben dick eingezeichnet.

In der Rotormitte ist ein alle Hohlleiter, Nutkeil und Zwischenlagen durchsetzender Bolzen 10 aus Isoliermaterial angeordnet, der im inneren Ende in den Rotorballen 2 eingesteckt ist. Dieser Bolzen dient der axialen Fixierung des Nutverbandes.

Die Kühlung der Erregerwicklung erfolgt nach der eingangs beschriebenen, dort mit Methode c) gekennzeichneten Kühlgasführung.

Eine erster Kühlgasstrom 11 gelangt vom (nicht eingezeichnten) Rotorwickelkopfraum durch seitliche Schlitze (gleichfalls nicht dargestellt) in den Hohlleitern 1a - 1d in diesselben und von dort, verteilt über eine gewissen axiale Länge, über radial verlaufende erste Kanäle 12a, 12b, 12c, 12d, welche auch die Keilunterlage 5 und den Nutkeil 4 durchsetzen, nach aussen. Diese ersten radialen Kanäle sind gebildet durch Durchgangsbohrungen in den Hohlleitern 1a bis 1d. Dabei ist der Kanal 12a dem Hohlleiter 1a, der Kanal 12b dem Hohlleiter 1b, der Kanal 12c dem Hohlleiter 1c und der Kanal 12d dem Hohlleiter 1d zugeordnet.

In Strömungsrichtung des Kühlgases gesehen hinter den ersten radialen Kanälen 12a,...,12d sind erste Absperrungen 13a, 13b, 13c und 13d vorgesehen, die durch Abquetschen der Hohlleiter 1a,...,1d gebildet sind. In Strömungsrichtung des Kühlgases gesehen sind hinter dem radialen Kanal 12 zweite Absperrungen 14a, 14b, 14c in den Hohlleitern 1a, 1b bzw. 1c vorgesehen. Diese zweiten Absperrungen bewirken zusammen mit der Absperrung 13d im Hohlleiter 1d, dass der erste Kühlgasstrom im endseitigen Abschnitt des Rotors aus diesem austritt und sich nicht mit dem nachstehend zu beschreibenden zweiten Kühlgasstrom 11', der über die Grundnut 9 dem mittleren Rotorabschnitt zugeführt wird, vermischt.

Der zweite Kühlgasstrom 11' gelangt von der Grundnut 9 aus in zweite radiale Kanäle 15a, 15b, 15c, 15d durch Bohrungen sowohl in dem Isolierstreifen 6, im Füllstreifen 7 und in den Hohlleitern 1a - 1d in die einzelnen Hohlleiter. Dabei reicht der Kanal 15a bis zum Hohlleiter 1a, der Kanal 15b nur bis zum Hohlleiter 1b, der Kanal 15c bis zum Hohlleiter 1c und der Kanal 15d nur bis zum Hohlleiter 1d. Hier sind dritte Absperrungen 16b, 16c, 16d in den Hohlleitern 1b, 1c bzw. 1d vorgesehen, um die Vermischung der einzelnen Teilgasströme zu vermeiden.

Die Teilgasströme in den Hohlleitern 1a bis 1d werden nahe der Rotorballenmitte (Bolzen 10) durch dritte radiale Kanäle 17a, 17b, 17c und 17d nach aussen abgeführt. Auch diese dritten radialen Kanäle sind durch radial verlaufende Bohrungen in den Hohlleitern, der Keilunterlage 5 und dem Nutkeil 4 gebildet. Vierte Absperrungen 18a, 18b, 18c und der Bolzen 10 sorgen dabei für einen geordneten Austritt des Kühlgases in Rotorballenmitte.

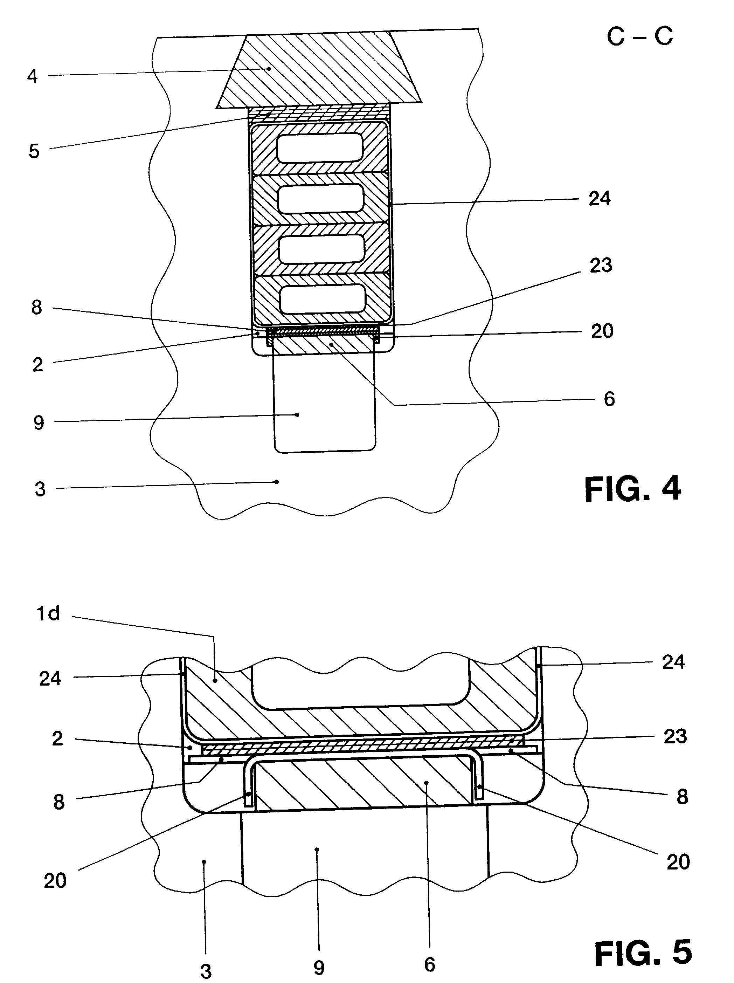

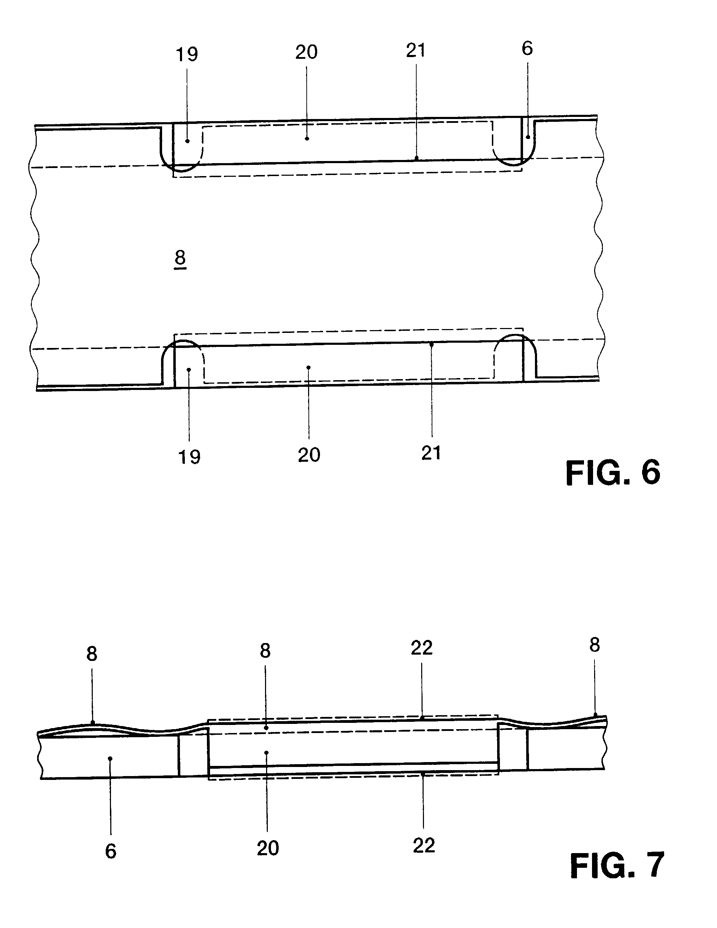

In den Figuren 3 bis 7 ist nun detailliert dargestellt, auf welche Weise die axiale Fixierung der Wellfeder 8 im Nutgrund oberhalb der Grundnut 9 erfolgt. Zu diesem Zweck weist der Isolierstreifen 6 in der Nähe des Rotorballenendes (rechter Zeichungsrand in Fig.1) symmetrisch zu seiner Längsachse zwei seitliche Ausnehmungen 19 auf, deren Tiefe etwa der Dicke des Isolierstreifens 6 entspricht. Anstelle von Ausnehmungen 19 können auch nur entsprechend lange Schlitze vorgesehen sein. Die Wellfeder 8 ist aus Federstahl gefertigt und besteht aus einem gewellten parallelen Streifen, wobei sich die Wellen in Streifenlängrichtung folgen. Der Streifen weist im Bereich der Ausnehmungen 19 im Isolierstreifen 6 auf beiden Seiten einen nach unten gebogenen Lappen 20 auf, dessen Biegekante in Fig.6 mit 21 bezeichnet ist. Dieser Lappen ist annähernd so breit wie der Isolierstreifen dick ist, d.h. er überragt nach unten hin den Isolierstreifen 6 nicht.

Um die Montage zu vereinfachen, kann - wie in Fig.7 durch strichlierte Linien angedeutet ist - am Ort der Ausnehmung 19 eine dünne Bandage 22 aus kunstharzgetränktem Glasgewebe um Wellfeder 8 und Isolierstreifen geschlungen sein. Eine Unterlage 23 zwischen Wellfeder 8 und dem untersten Hohlleiter 1d verhindert Beschädigungen der Hohlleiterisolation 24.

Durch die Formgebung des Isolierstreifens 6, der an seiner Unterseite der Geometrie des Nutgrundes angepasst ist, in Kombination mit dem Bolzen 10 ist der Isolierstreifen 6 axial gesichert. Die in die besagten Ausnehmungen 19 eingreifenden Lappen 20 der Wellfeder 8 wiederum sichern die axiale Lage der Wellfeder 8 gegenüber dem Isolierstreifen 6 und damit auch die Lage der Wellfeder gegenüber der Nut und auch der Erregerwicklung. Es genügt dabei, diese Sicherung nur am Ballenende vorzunehmen. Im Bedarfsfall können auch mehr als ein Ausnehmungspaar 19 und zugehörige Lappen 20 vorgesehen werden. Diese müssen dann in Nutlängsrichtung gesehen sehr dicht beeinander liegen, damit sich die Wellfeder 8 strecken kann.

Es hat sich gezeigt, dass es ausreichend ist, die Wellfeder 8 nur an beiden Rotorballenenden anzuordnen, wie es in Fig.1 dargestellt ist, also im Bereich zwischen dem Ballenende und den zweiten Absperrungen 14a,..., wo keine radialen Kanäle die Wellfeder durchsetzen und diese in ihrer Funktion beeinträchtigen können.

Die Erfindung ist selbstverständlich nicht auf Rotoren mit einer Erregerwicklung aus im wesentlichen in Längsrichtung durchströmten hohlen Erregerleitern und mit einem Kühlschmema gemäss Fig.1 beschränkt. Sie lässt sich auch für Rotoren ohne Grundnut anwenden, also für Rotoren, wie sie Gegenstand der EP-B-0 173877 sind. Auch kann die federelastische Zwischenlage eine andere als eine Wellfeder sein.

Wie ein Blick auf Fig.1 der eingangs genannten US-A-4,152,610 zeigt, wird auch dort ein Isolierstreifen 6 als Nutgrundisolation eingesetzt. Bei der bekannten Erregerwicklung ist zwar kein federelastisches Glied zwischen dem untersten Erregerleiter und dem Isolierstreifen vorgesehen, und auch die direkte Gaskühlung ist auf andere Art und Weise realisiert, doch lässt sich die erfindungsgemässe Fixierung einer Wellfeder 8 am Isolierstreifen 6 auch bei einer solchen Anordnung verwenden, ohne den durch die Erfindung gesteckten Rahmen zu verlassen.

### BEZEICHNUNGSLISTE

- 1a,...: Hohlleiter
- 2: Nuten in 3
- 3: Rotorballen
- 4: Nutkeil
- 5: Keilunterlage
- 6: Isolierstreifen
- 7: Füllstreifen
- 8: Wellfeder
- 9: Grundnut
- 10: Haltebolzen
- 11: erster Kühlgasstrom
- 12a,..: erste radiale Kanäle
- 13a,..: erste Absperrungen
- 14a,..: zweite Absperrungen
- 15a,..: zweite radiale Kanäle
- 16a,..: dritte Absperrungen
- 17a,..: dritte radiale Kanäle
- 18a,..: vierte Absperrungen
- 19: seitliche Ausnehmungen in 6
- 20: Lappen an 8
- 21: Biegekante an 8
- 22: Glasgewebebandage
- 23: Unterlage
- 24: Hohlleiterisolation

## Patentansprüche

1. Rotor eines Turbogenerators mit direkter Gaskühlung der Erregerwicklung (1), wobei die Erregerwicklungsleiter in Längsnuten (2) im Rotorballen (3) des Rotors angeordnet sind und diese Nuten mittels Nutkeilen (4) verschlossen sind, und wobei zwischen dem Nutgrund und dem darüberliegenden Erregerwicklungsleiter (1d) ein Isoliertreifen (6) vorgesehen ist, dadurch gekennzeichnet, dass zwischen dem besagten Isolierstreifen (6) und dem besagten Erregerwicklungsleiter (1d) eine federelastische Zwischenlage (8) in Form eines parallelen Streifens, vorzugsweise eine Wellfeder, vorgesehen ist, die sich vom Ballenende ausgehend in Richtung Rotorballenmitte erstreckt, und dass die federelastische Zwischenlage (8) ein Paar nach unten weisende Vorsprünge (20) aufweist, die in seitliche Ausnehmungen (19) im Isoliertreifen (6) eingreifen.

2. Rotor nach Anspruch 1, dadurch gekennzeichnet, dass die Vorsprünge (20) durch Abbiegen eines im Vergleich zur Gesamtlänge der federelastischen Zwischenlage kurzen Randstückes gebildet sind.

3. Rotor nach Anspruch 1 oder 2, dadurch gekennzeichnet, dass die radiale Höhe des nach unten weisenden Vorsprungs (20) in etwa der Dicke des Isolierstreifens (6) entspricht.

4. Rotor nach Anspruch einem der Ansprüche 1 bis 3, dadurch gekennzeichnet, dass bei einem Rotor mit Grundnut (9) die Breite des Isolierstreifens (6) im Bereich der Ausnehmung (19) etwa der Nutweite der Grundnut (9) entspricht.

5. Rotor nach einem der Ansprüche 1 bis 4, dadurch gekennzeichnet, dass im Bereich der Ausnehmung (19) eine Bandage (22) vorgesehen ist, welche um den Isolierstreifen (6) und die federelastische Zwischenlage (8) geschlungen ist.

## Claims

1. Rotor of a turbogenerator having direct gas cooling of the excitation winding (1), the excitation winding conductors being arranged in longitudinal slots (2) in the rotor body (3) of the rotor and these slots being closed by means of slot wedges (4), and an insulating strip (6) being provided between the slot base and the excitation winding conductor (1d) located above it, characterized in that a resiliently elastic intermediate layer (8) in the form of a parallel strip, preferably a corrugated spring, is provided between said insulating strip (6) and said excitation winding conductor (1d), which intermediate layer extends in the direction of the rotor body centre, originating from the body end, and in that the resiliently elastic intermediate layer (8) has a pair of projections (20) which point downwards and engage in lateral recesses (19) in the insulating strip (6).

2. Rotor according to Claim 1, characterized in that the projections (20) are formed by bending an edge piece which is short in comparison to the overall length of the resiliently elastic intermediate layer.

3. Rotor according to Claim 1 or 2, characterized in that the radial height of the projection (20) which points downwards corresponds approximately to the thickness of the insulating strip (6).

4. Rotor according to one of Claims 1 to 3, characterized in that, in the case of a rotor having a keyway (9), the width of the insulating strip (6) in the region of the recess (19) corresponds approximately to the slot width of the keyway (9).

5. Rotor according to one of Claims 1 to 4, characterized in that a binding (22) is provided in the region of the recess (19), which binding is looped around the insulating strip (6) and the resiliently elastic intermediate layer (8).

## Revendications

1. Rotor d'un turbogénérateur avec refroidissement direct au gaz de l'enroulement d'excitation (1), dans lequel les conducteurs de l'enroulement d'excitation sont disposés dans des encoches longitudinales (2) dans le corps (3) du rotor et ces encoches sont fermées avec des cales d'encoche (4), et dans lequel il est prévu une bande isolante (6) entre le fond de l'encoche et le conducteur (1d) de l'enroulement d'excitation posé sur celui-ci, caractérisé en ce qu'il est prévu, entre ladite bande isolante (6) et ledit conducteur (1d) de l'enroulement d'excitation, une couche intermédiaire (8) de nature élastique sous la forme d'une bande parallèle, de préférence un ressort ondulé, qui s'étend de l'extrémité du corps en direction du milieu du corps du rotor, et en ce que la couche intermédiaire (8) de nature élastique présente une paire de saillies (20) pointant vers le bas, qui s'engagent dans des découpes latérales (19) dans la bande isolante (6).

2. Rotor suivant la revendication 1, caractérisé en ce que les saillies (20) sont formées par pliage d'une partie de bord courte par comparaison avec la longueur totale de la couche intermédiaire de nature élastique.

3. Rotor suivant la revendication 1 ou 2, caractérisé en ce que la hauteur radiale de la saillie (20) pointant vers le bas correspond environ à l'épaisseur de la bande isolante (6).

4. Rotor suivant l'une quelconque des revendications 1 à 3, caractérisé en ce que, dans un rotor avec une encoche de fond (9), la largeur de la bande isolante (6) dans la région de la découpe (19) correspond environ à la largeur du fond de l'encoche de fond (9).

5. Rotor suivant l'une quelconque des revendications 1 à 4, caractérisé en ce que, dans la région de la découpe (19), il est prévu un bandage (22), qui est enroulé autour de la bande isolante (6) et de la couche intermédiaire (8) de nature élastique.
